# EUROPEAN PATENT SPECIFICATION

(11) **EP 3 872 682 B1**
(45) Date of publication and mention of the grant of the patent: **15.11.2023**
(21) Application number: 20210275.2
(22) Date of filing: 27.11.2020
(51) Int. Cl.: G06K 7/10, G06K 7/00, H04W 74/08

(54) **READER AND METHOD OF OPERATING A READER**
LESEGERÄT UND VERFAHREN ZUM BETREIBEN EINES LESEGERÄTES
LECTEUR ET PROCÉDÉ DE FONCTIONNEMENT D'UN LECTEUR

(30) Priority: 25.02.2020 JP 2020029316
(43) Date of publication of application: 01.09.2021
(73) Proprietor: Toshiba Tec Kabushiki Kaisha, Shinagawa-ku Tokyo (JP)
(72) Inventor: Suzuki, Shigeaki, Tokyo, 141-8562 (JP)
(74) Representative: Hoffmann Eitle

(56) References cited:
- WO-A1-2007/026412
- JP-A- 2010 067 035
- KR-B1- 101 160 894
- US-A1- 2006 279 409
- US-B2- 7 764 164

## Description

### FIELD

Embodiments described herein relate generally to readers.

### BACKGROUND

A reader acquires data such as an ID from a wireless tag such as a Radio Frequency Identification (RFID) tag. Such a reader searches for a channel which is not used by another device in order to prevent crosstalk with another device. The reader communicates with the wireless tag on the searched channel.

In recent years, there is a problem that the reader cannot determine the state of the channel while not communicating with the wireless tag.

Document US 2006/0279409 relates a to channel selection method. Document WO 2007/026412 A1 relates to an interrupt allowing time is provided for interrupting communication being performed by a reader/writer. Document US 7,764,164 B2 relates to an interrogator that autonomously reduces interference of receiving radio waves in a wireless tag.

### SUMMARY OF THE INVENTION

One of the objects of the present invention is to improve prior art techniques and overcome at least some of the prior art problems as for instance above illustrated. The object of the invention is achieved by the subject-matter of the independent claims. Advantageous embodiments are defined in the dependent claims. Further examples are provided for facilitating the understanding of the invention.

According to a first aspect of the present disclosure, it is provided a reader, comprising an antenna for communicating with a wireless tag; a processor configured to measure a time when a radio wave is received on a predetermined channel during a carrier sensing time, the carrier sensing time being a time when the wireless tag is not communicating; and a memory storage configured to store a channel report indicating the time when the radio wave is received; wherein the processor is configured to acquire an intensity value of the radio wave received on the predetermined channel, and the channel report indicates the intensity value.

Optionally, in the reader according to the first aspect of the invention, the predetermined channel includes a plurality of channels.

Optionally, in the reader according to the first aspect of the invention, the processor is configured to output a warning when the intensity value is greater than a predetermined threshold value.

Optionally, in the reader according to the first aspect of the invention, the channel report includes a channel availability.

Optionally, in the reader according to the first aspect of the invention, the processor is configured to, when no configurable channel is available, cause an error message to be displayed.

Optionally, the reader according to the first aspect of the invention further comprises a communicator configured to send and receive data to and from a terminal, wherein the processor is configured to send the channel report to the terminal through the communicator.

Optionally, in the reader according to the first aspect of the invention, the channel report includes a total time during which the reader communicates with the wireless tag on a corresponding channel.

Optionally, in the reader according to the first aspect of the invention, the channel report includes a total time during which another terminal communicates with the wireless tag on a corresponding channel.

According to a second aspect of the invention, it is provided a method of operating a reader, comprising: communicating with a wireless tag; measuring a time when a radio wave is received on a predetermined channel during a carrier sensing time, the carrier sensing time being a time when the wireless tag is not communicating; and storing a channel report indicating the time when the radio wave is received; acquiring an intensity value of the radio wave received on the predetermined channel, and wherein the channel report indicates the intensity value.

Optionally, in the method according to the second aspect of the invention, the predetermined channel includes a plurality of channels.

Optionally, the method according to the second aspect of the invention further comprises outputting a warning when the intensity value is greater than a predetermined threshold value.

Optionally, in the method according to the second aspect of the invention, the channel report includes a channel availability.

Optionally, the method according to the second aspect of the invention further comprises causing an error message to be displayed when no configurable channel is available.

Optionally, the method according to the second aspect of the invention further comprises sending and receiving data to and from a terminal; and sending the channel report to the terminal.

Optionally, in the method according to the second aspect of the invention, the channel report includes a total time during which the reader communicates with the wireless tag on a corresponding channel.

Optionally, in the method according to the second aspect of the invention, the channel report includes a total time during which another terminal communicates with the wireless tag on a corresponding channel.

### DESCRIPTION OF THE DRAWINGS

FIG. 1 is a block diagram illustrating a configuration (structural) example of a POS system according to at least one embodiment;
FIG. 2 is a diagram conceptually illustrating a configuration example of a reader according to at least one embodiment;
FIG. 3 is a diagram conceptually illustrating a configuration example of an antenna according to at least one embodiment;
FIG. 4 is a block diagram illustrating a configuration example of the reader according to at least one embodiment;
FIG. 5 is a block diagram illustrating a configuration example of a POS terminal according to at least one embodiment;
FIG. 6 is a diagram illustrating a configuration example of a channel report according to at least one embodiment;
FIG. 7 is a flowchart illustrating an operation example of the reader according to at least one embodiment; and
FIG. 8 is a flowchart illustrating an operation example of the reader according to at least one embodiment.

### DETAILED DESCRIPTION

In order to solve the problems described above, a reader capable of determining a channel state while not communicating with a wireless tag is provided.

According to at least one embodiment, a reader includes an antenna, a processor, and a storage unit (memory storage). The antenna communicates with a wireless tag. The processor measures a time when a radio wave is received on a predetermined channel during a carrier sense time (a carrier sensing time). The carrier sensing time is a time when the wireless tag is not communicating. The storage unit stores a channel report indicating the time.

Hereinafter, embodiments will be described with reference to the drawings.

A POS system according to the embodiment settles payment of a merchandise item to which a wireless tag such as RFID is attached. The POS system acquires an ID from a wireless tag attached to the merchandise item using a reader which communicates with the wireless tag. The POS system identifies the type, price of the merchandise item, and the like based on the acquired ID. The POS system settles payment of a merchandise item based on the price of the merchandise item or the like. For example, the POS system settles payment of merchandise items displayed in a store or the like.

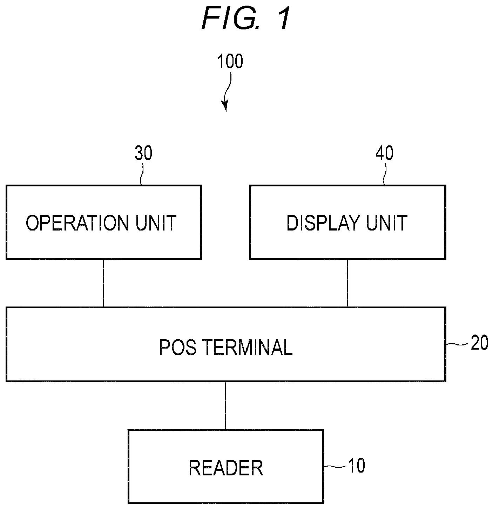

FIG. 1 illustrates a configuration example of a POS system 100 according to at least one embodiment. As illustrated in FIG. 1, the POS system 100 includes a reader 10, a POS terminal 20, an operation unit 30, and a display unit 40, for example. The POS terminal 20 is connected to the reader 10, the operation unit 30, and the display unit 40 so as to be capable of wireless or wired communication.

The reader 10 reads the ID from the wireless tag attached to the merchandise item. The reader 10 transmits the read ID to the POS terminal 20. The reader 10 is a handy type terminal which reads a wireless tag while being carried by an operator. The reader 10 will be described in detail below.

The ID read by the reader 10 is an ID for identifying a merchandise item. For example, the ID is composed of a Stock Keeping Unit (SKU) code indicating the type of merchandise item to which the wireless tag is attached and a serial number which identifies each individual merchandise item. For example, the SKU code is a Japanese Article Number (JAN) code. The ID configuration is not limited to a particular configuration.

The POS terminal 20 settle payment of the merchandise item based on the ID or the like from the reader 10. For example, the POS terminal 20 identifies the price of the merchandise item based on the ID from the reader 10. The POS terminal 20 settles payment of the merchandise item based on the specified price. That is, the POS terminal 20 collects the price of the merchandise item. The POS terminal 20 will be described below in detail.

The operation unit 30 receives inputs of various operations from an operator. The operation unit 30 transmits a signal indicating the input operation to the POS terminal 20. For example, the operation unit 30 includes a keyboard, buttons, a touch panel, or the like.

The display unit 40 displays various information under the control of the POS terminal 20. For example, the display unit 40 is composed of a liquid crystal monitor. When the operation unit 30 is composed of a touch panel, the display unit 40 may be formed integrally with the operation unit 30.

Next, the reader 10 will be described.

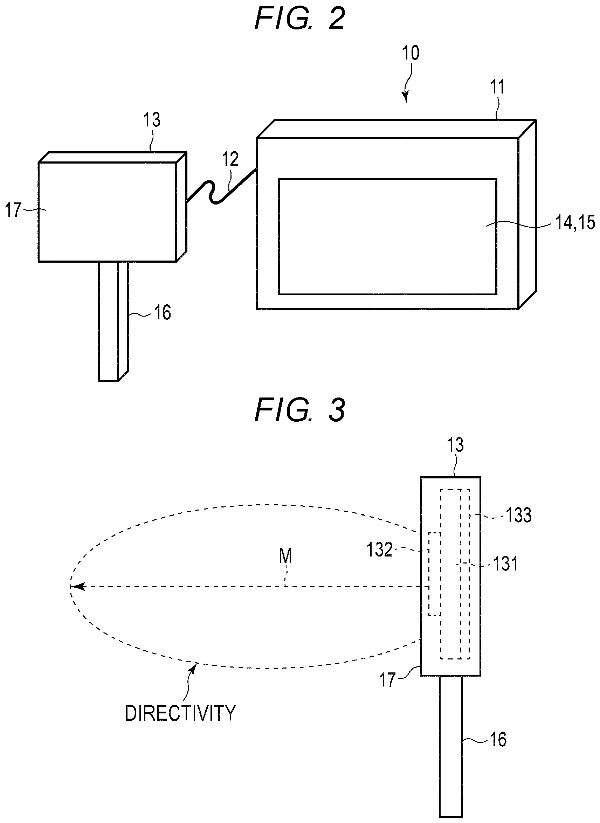

FIG. 2 is a perspective view illustrating the reader 10 according to the embodiment. The reader 10 includes a main body 11 and an antenna 13 connected to the main body 11 by an antenna cable 12. The main body 11 includes an operation unit 14, a display unit 15, and the like.

The operation unit 14 receives inputs of various operations from an operator. The operation unit 14 transmits a signal indicating the input operation to a processor 111. Here, the operation unit 14 includes a touch panel or the like.

The display unit 15 displays information such as the work to be executed, the state of the communication device, or the communication result. For example, the display unit 15 is composed of a liquid crystal monitor. Here, the display unit 15 is composed of a liquid crystal monitor integrally formed with the operation unit 14.

The antenna 13 outputs a radio wave on a predetermined channel for communicating with the wireless tag. The antenna 13 outputs radio waves on a plurality of channels.

The antenna 13 has a grip 16 and a housing 17. The grip 16 is a handle for an operator to hold the antenna 13.

The antenna 13 and the main body 11 may be integrally formed.

FIG. 3 is a cross-sectional view illustrating a configuration example of the antenna 13. The antenna 13 may be a plane patch antenna. The antenna 13 includes a plate-shaped dielectric 131, a radiator 132 formed on one surface of the plate-shaped dielectric 131, and a ground plane 133 (GND) formed on the other surface of the plate-shaped dielectric 131.

The antenna 13 has directivity having a maximum gain M in a direction substantially perpendicular to the center of one surface. The reader 10 designates one of a plurality of wireless tags within the communication range to perform communication. For example, the wireless tag is a Radio Frequency Identification (RFID) tag.

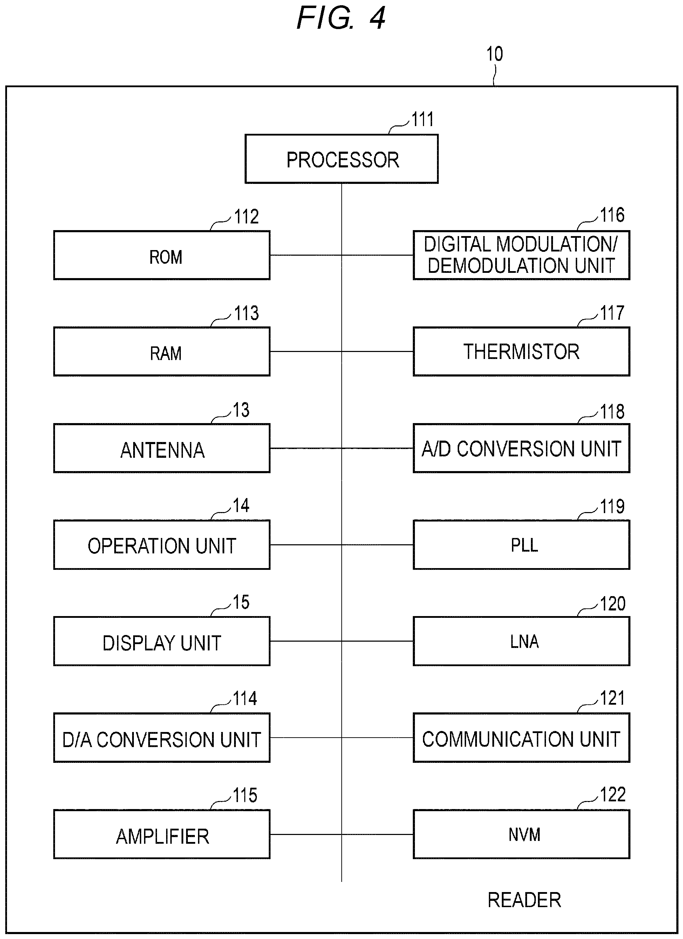

FIG. 4 is a block diagram illustrating a configuration example of a control system of the reader 10. As illustrated in FIG. 4, the reader 10 includes the processor 111, a ROM 112, a RAM 113, the antenna 13, the operation unit 14, the display unit 15, a D/A conversion unit 114, an amplifier 115, a digital modulation/demodulation unit 116, a thermistor 117, an A/D conversion unit 118, a PLL 119, an LNA 120, a communication unit (communicator) 121, an NVM 122, and the like.

The processor 111 is connected to the ROM 112, the RAM 113, the antenna 13, the operation unit 14, the display unit 15, the D/A conversion unit 114, the amplifier 115, the digital modulation/demodulation unit 116, the thermistor 117, the A/D conversion unit 118, the PLL 119, the LNA 120, the communication unit 121, and the NVM 122 via a data bus or the like.

The antenna 13, the operation unit 14, and the display unit 15 are as described above.

The processor 111 controls the operation of the entire reader 10. For example, the processor 111 acquires the ID from the wireless tag using the antenna 13. Further, the processor 111 transmits the acquired ID to the POS terminal 20 via the communication unit 121.

For example, the processor 111 includes a CPU and the like. Further, the processor 111 may be configured by an Application Specific Integrated Circuit (ASIC) or the like. Further, the processor 111 may be configured by a Field Programmable Gate Array (FPGA) or the like.

The ROM 112 is a non-volatile memory in which control programs, control data, and the like are stored in advance. The control program and control data stored in the ROM 112 are incorporated in advance according to the specifications of the reader 10.

The RAM 113 is a volatile memory. The RAM 113 temporarily stores data which is being processed by the processor 111, and the like. The RAM 113 stores various application programs based on instructions from the processor 111. Further, the RAM 113 may store data necessary for executing the application program, the execution result of the application program, and the like.

The D/A converter 114 converts a digital signal into an analog signal. For example, the D/A conversion unit 114 generates an analog signal for causing the antenna 13 to transmit a transmission wave under the control of the processor 111.

The amplifier 115 amplifies the analog signal. For example, the amplifier 115 amplifies the analog signal from the antenna 13.

The digital modulation/demodulation unit 116 performs digital modulation and digital demodulation.

The thermistor 117 is a sensor for measuring temperature.

The A/D conversion unit 118 converts an analog signal into a digital signal. For example, the A/D conversion unit 118 converts the analog signal from the antenna 13 into a digital signal under the control of the processor 111.

The PLL 119 is a phase locked loop circuit.

The LNA 120 is a low noise amplifier.

The communication unit 121 is an interface for transmitting/receiving data to/from the POS terminal 20 in a wired or wireless manner. For example, the communication unit 121 supports RS-232. Further, the communication unit 121 may support a Universal Serial Bus (USB) connection. Further, the communication unit 121 may support a wired or wireless Local Area Network (LAN) connection.

The NVM 122 (storage unit) is a non-volatile memory in which data can be written and rewritten. The NVM 122 is composed of, for example, a Hard Disk Drive (HDD), a Solid State Drive (SSD), a flash memory, or the like. The NVM 122 stores control programs, applications, various data, and the like according to the operational use of the reader 10.

The NVM 122 stores the channel report. The channel report will be described below.

The reader 10 may have a configuration as necessary in addition to the configurations illustrated in FIGS. 2 to 4 or a specific configuration may be excluded from the reader 10.

Next, the POS terminal 20 will be described.

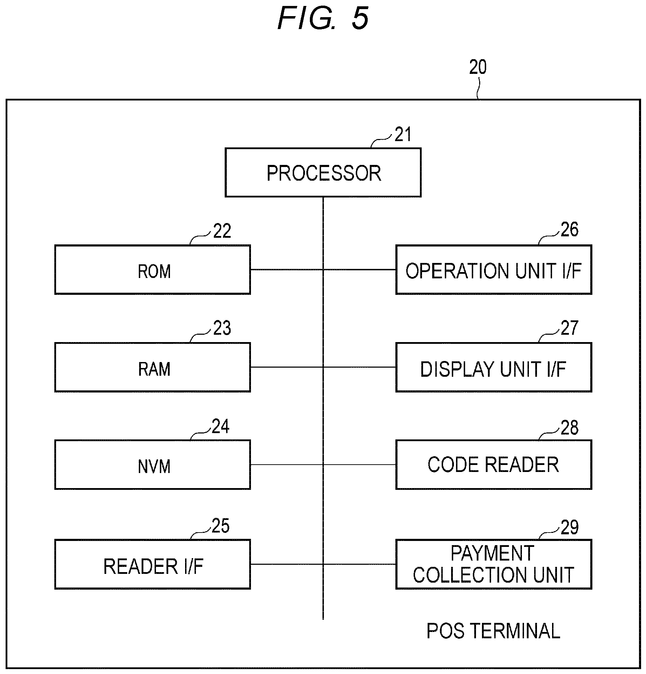

FIG. 5 illustrates a configuration example of the POS terminal 20 according to at least one embodiment. FIG. 5 is a block diagram illustrating a configuration example of the POS terminal 20. As illustrated in FIG. 5, the POS terminal 20 includes a processor 21, a ROM 22, a RAM 23, an NVM 24, a reader interface 25, an operation unit interface 26, a display unit interface 27, a code reader 28, and a payment collection unit 29, for example.

The processor 21 is connected to the ROM 22, the RAM 23, the NVM 24, the reader interface 25, the operation unit interface 26, the display unit interface 27, the code reader 28, and the payment collection unit 29 via a data bus or the like.

The POS terminal 20 may have a configuration as necessary in addition to the configuration illustrated in FIG. 5 or a specific configuration may be excluded from the POS terminal 20.

The processor 21 has a function of controlling the operation of the entire POS terminal 20. The processor 21 may include an internal cache, various interfaces, and the like. The processor 21 realizes various processes by executing a program stored in advance in the internal memory, the ROM 22 or the NVM 24.

Some of the various functions realized by the processor 21 executing the program may be realized by a hardware circuit. In this case, the processor 21 controls the functions performed by the hardware circuit.

The ROM 22 is a non-volatile memory in which control programs and control data are stored in advance. The control program and control data stored in the ROM 22 are incorporated in advance according to the specifications of the POS terminal 20.

The RAM 23 is a volatile memory. The RAM 23 temporarily stores the data being processed by the processor 21, and the like. The RAM 23 stores various application programs based on instructions from the processor 21. Further, the RAM 23 may store data necessary for executing the application program, the execution result of the application program, and the like.

The NVM 24 is a non-volatile memory in which data can be written and rewritten. The NVM 24 is composed of, for example, an HDD, an SSD, a flash memory, or the like. The NVM 24 stores a control program, an application, various data, and the like according to the operational use of the POS terminal 20.

The reader interface 25 is an interface for transmitting/receiving data to/from the reader 10 in a wired or wireless manner. For example, the reader interface 25 supports RS-232. Further, the reader interface 25 may support the USB connection. Further, the reader interface 25 may support a wired or wireless LAN connection.

The operation unit interface 26 is an interface for transmitting/receiving data to/from the operation unit 30 in a wired or wireless manner. The operation unit interface 26 transmits the signal from the operation unit 30 to the processor 21. The operation unit interface 26 may supply power to the operation unit 30. For example, the operation unit interface 26 may support a USB connection. Further, the operation unit interface 26 may support a wired or wireless LAN connection.

The display unit interface 27 is an interface for transmitting/receiving data to/from the display unit 40 in a wired or wireless manner. The display unit interface 27 sends the signal from the processor 21 to the display unit 40. Further, the display unit interface 27 may supply power to the display unit 40. For example, the display unit interface 27 may support a USB connection. Further, the display unit interface 27 may support a wired or wireless LAN connection.

The code reader 28 reads a code (for example, a barcode or a two-dimensional code) attached to the merchandise item. The code reader 28 sends the information obtained from the code to the processor 21.

The payment collection unit 29 collects the price under the control of the processor 21. For example, the payment collection unit 29 is composed of a cash drawer or the like for collecting cash. Further, the payment collection unit 29 may be composed of a mechanism for performing credit card payment, electronic money payment, code payment, or the like.

Next, the channel report will be described.

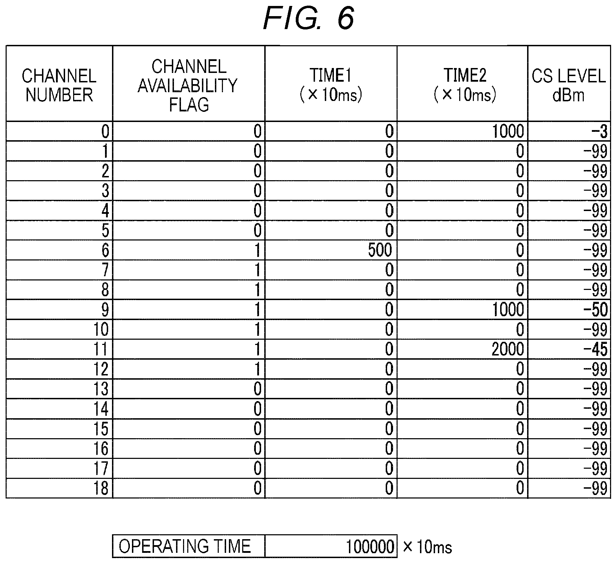

FIG. 6 illustrates a configuration example of the channel report. As illustrated in FIG. 6, the channel report stores "channel number", "channel availability flag", "TIME1", "TIME2", and "CS level" in association with each other. In addition, the channel report stores "operating time".

The "channel number" indicates the channel number with which the reader 10 can communicate. That is, the "channel number" is a number indicating a radio wave band in which the processor 111 can transmit and receive through the antenna 13. Each "channel number" corresponds to a predetermined frequency (for example, about 900 MHz). Here, the "channel number" stores a value from "0" to "18".

The "channel availability flag" is a flag indicating whether the corresponding channel (the channel indicated by the corresponding "channel number") is permitted to be used for communication with the wireless tag. Here, "0" indicates that the corresponding channel is not permitted to be used for communication with the wireless tag. Further, "1" indicates that the corresponding channel is permitted to be used for communication with the wireless tag. The "channel availability flag" may be set in advance by an operator or the like. Here, "1" is set in the "channel available flag" corresponding to the "channel number" from "6" to "12".

The "TIME1" indicates the total time (length of time) that the reader 10 communicates with the wireless tag on the corresponding channel. That is, the "TIME1" indicates the total time during which the reader 10 establishes communication with the wireless tag on the corresponding channel. Here, the "TIME1" indicates a time in units of 10 ms. Further, the value of the "TIME1" corresponding to a predetermined channel number (CH) is referred to as TIME 1 (CH) " .

The "TIME2" indicates the total time of receiving radio waves from other terminals on the corresponding channel. For example, the "TIME2" is the time when another terminal communicates with the wireless tag on the corresponding channel. Here, the "TIME2" indicates a time in units of 10 ms. Further, the value of the "TIME2" corresponding to a predetermined channel number (CH) is referred to as "TIME2(CH)".

The "CS level" indicates the strength value of the radio wave received from another terminal on the corresponding channel. Here, the "CS level" indicates intensity in units of dBm. The value of the "CS level" corresponding to a predetermined channel number (CH) is called "CS level(CH)".

The "Operating time" indicates the time that elapses since the reader 10 started up. That is, the "operating time" indicates the time that elapses since the reader 10 was powered on. Here, the "operating time" indicates a time in units of 10 ms. For example, the processor 111 adds 1 to the "operating time" every 10 ms.

Next, the functions realized by the reader 10 will be described. The functions realized by the reader 10 are realized by the processor 111 executing a program stored in the internal memory, the ROM 112, the NVM 122, or the like.

First, the processor 111 has a function of setting a channel for communicating with the wireless tag. That is, the processor 111 has a function of executing carrier sense.

The processor 111 determines whether to start communication with the wireless tag according to an operation input to the operation unit 14 or the like or a signal from the POS terminal 20 or the like. When determining to start communication with the wireless tag, the processor 111 refers to the channel report and selects one of the channels whose "channel availability flag" is set to "1".

Upon selecting one of the channels, the processor 111 determines if the selected channel is available. That is, the processor 111 uses the antenna 13 to determine whether the radio wave is received on the selected channel. When the radio wave is not received on the selected channel, the processor 111 determines that the selected channel is available. In this case, the processor 111 sets the channel selected as the channel for communicating with the wireless tag.

When the radio wave is received on the selected channel, the processor 111 determines that the selected channel is unavailable. In this case, the processor 111 refers to the channel report and selects another one of the channels whose "channel availability flag" is set to "1". When the processor 111 selects another one of the channels, the processor 111 performs the same operation as described above.

When there is no configurable channel, the processor 111 may display an error indicating that there is no configurable channel on the display unit 15 or the like. Further, when there is no configurable channel, the processor 111 may send an error indicating that there is no configurable channel to the POS terminal 20 through the communication unit 121.

When the channel for communicating with the wireless tag is set, the processor 111 transmits/receives data to/from the wireless tag through the antenna 13 on the set channel. For example, the processor 111 acquires the ID from the wireless tag. The processor 111 transmits the acquired wireless tag ID to the POS terminal through the communication unit 121. Further, the processor 111 may display the acquired ID on the display unit 15.

Moreover, the processor 111 may transmit predetermined data to the wireless tag.

Further, the processor 111 may have a function of storing the time of communication with the wireless tag on the set channel in the channel report.

When setting the channel, the processor 111 starts a timer. When the timer is started, the processor 111 communicates with the wireless tag on the set channel (CH) . When the communication on the set channel (CH) ends, the processor 111 adds a value to "TIME1 (CH)" based on the value tracked by the timer. For example, the processor 111 adds the value tracked by the timer (in ms unit) divided by 10 ms to "TIME1 (CH)".

Further, the processor 111 has a function of receiving radio waves in each channel while (carrier sense time) not communicating with the wireless tag.

The processor 111 sets a predetermined channel (for example, "0") in the carrier sense time. When the channel is set, the processor 111 receives the radio wave on the channel set through the antenna 13. That is, the processor 111 acquires an intensity value of the radio wave received on the set channel. Here, the intensity value is a value in units of dBm.

When the intensity value is larger than a predetermined reception threshold value (for example, "-74" or "-99"), the processor 111 displays a warning indicating that the radio wave is received on the channel on the display unit 15. The processor 111 may output a voice or a warning sound indicating that a radio wave is received on the channel.

When acquiring the intensity value of the radio wave received on the set channel, the processor 111 sets the next channel. When the next channel is set, the processor 111 similarly receives the radio wave on the channel set through the antenna 13.

The processor 111 repeats the above operation to acquire the intensity value of the radio wave received by each channel.

Here, the processor 111 receives a radio wave in each channel every 10 ms in the carrier sense time.

Further, the processor 111 has a function of storing the time when the radio wave is received in each channel and the intensity value of the received radio wave in the channel report in the carrier sense time.

When the radio wave is received on the set channel (CH), the processor 111 measures the time when the radio wave is received and adds it to "TIME2(CH)". Here, the processor 111 adds 1 to "TIME2(CH)" every 10 ms.

Further, the processor 111 updates the value of "CS level(CH)" in the channel report based on the intensity value of the received radio wave. When the intensity value is larger than the previously stored "CS level(CH)", the processor 111 updates the value of "CS level(CH)" to the intensity value.

When the intensity value is equal to or lower than the previously stored "CS level(CH)", the processor 111 does not update the value of "CS level(CH)".

The processor 111 performs the same operation in each channel.

Further, the processor 111 has a function of transmitting the channel report to the POS terminal 20.

When the processor 111 receives a request for a channel report from the POS terminal 20 through the communication unit 121, the processor 111 sends a response including the channel report to the POS terminal 20.

The processor 111 may also send the channel report to the POS terminal 20 at predetermined intervals.

Next, the functions realized by the POS terminal 20 will be described. The function realized by the POS terminal 20 is realized by the processor 21 executing a program stored in the internal memory, the ROM 22, the NVM 24, or the like.

First, the processor 21 has a function of acquiring the channel report from the reader 10.

The processor 21 sends a response requesting the channel report through the reader interface 25. The processor 21 obtains the response including the channel report from the reader 10 through the reader interface 25.

The processor 21 may be one that acquires the channel report transmitted by the reader 10 at predetermined intervals.

Further, the processor 21 has a function of outputting a warning based on the channel report.

When any value of "TIME2" in the acquired channel report is set to "0" or more, the processor 21 outputs a warning indicating that the radio wave output by another device reaches the reader 10. For example, the processor 21 displays the warning on the display unit 40. Further, the processor 21 may output voice and warning sound as the warning. The processor 21 may also send the warning to another device.

The processor 21 may output the warning when any value of the "CS level" exceeds a predetermined reception threshold.

Further, the warning may further indicate a channel on which a radio wave from another device is received.

Next, an operation example of the reader 10 will be described.

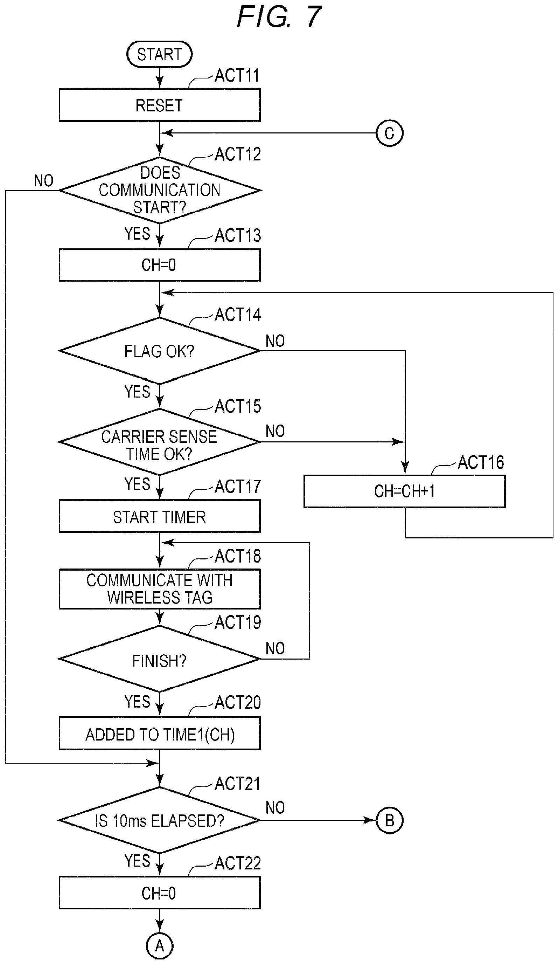

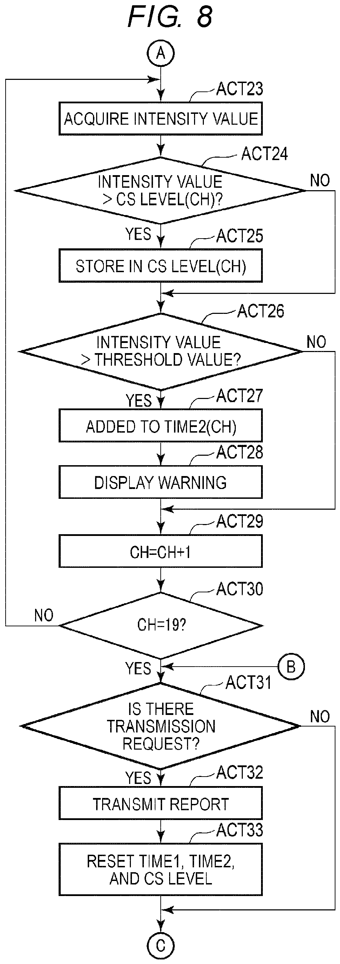

FIGS. 7 and 8 are flowcharts for explaining an operation example of the reader 10.

First, the processor 111 of the reader 10 resets the channel report (ACT 11). For example, the processor 111 stores "0" in the "TIME1", the "TIME2", and the "operating time". Further, the processor 111 stores "-99" in the "CS level".

When the channel report is reset, the processor 111 determines whether to start communication with the wireless tag (ACT 12). When determining to start communication with the wireless tag (ACT 12, YES), the processor 111 substitutes 0 into CH indicating the channel number (ACT 13).

When 0 is assigned to CH, the processor 111 determines whether the "channel availability flag" corresponding to CH is set to "1" (ACT 14). When determining that the "channel availability flag" corresponding to CH is set to "1" (ACT 14, YES), the processor 111 determines whether the channel indicated by CH is available (ACT 15).

When it is determined that the "channel availability flag" corresponding to CH is not set to "1" (ACT 14, NO), or when it is determined that the channel indicated by CH is not available (ACT 15, NO), the processor 111 increments CH (ACT 16). Here, the processor 111 may return to ACT 13 when CH becomes 19. In addition, the processor 111 may output an error indicating that there is no configurable channel when CH becomes 19.

When it is determined that the channel indicated by CH is available (ACT 15, YES), the processor 111 starts a timer (ACT 17). When the timer is started, the processor 111 communicates with the wireless tag on the channel indicated by CH through the antenna 13 (ACT 18).

When communicating with the wireless tag, the processor 111 determines whether to finish the wireless tag communication (ACT 19). When it is determined that the wireless tag communication is not finished (ACT 19, NO), the processor 111 returns to ACT 18.

When it is determined that the wireless tag communication is finished (ACT 19, YES), the processor 111 adds a value to the "TIME1 (CH) " based on the value tracked by the timer (ACT 20). When a value is added to the "TIME1(CH)" (ACT20), or when it is determined that communication with the wireless tag is not started (ACT12, NO), the processor 111 determines whether 10 ms elapses from ACT20 or ACT30, YES (ACT21).

When determining that 10 ms elapses (ACT 21, YES), the processor 111 substitutes 0 into CH (ACT 22). When 0 is substituted for CH, the processor 111 acquires the intensity value of the radio wave received by the channel indicated by CH via the antenna 13 (ACT 23).

When the intensity value is acquired, the processor 111 determines whether the intensity value is larger than the CS level (CH) (ACT24). When determining that the intensity value is larger than the CS level(CH) (ACT24, YES), the processor 111 stores the intensity value in the CS level(CH) (ACT25).

When it is determined that the intensity value is equal to or less than the CS level (CH) (ACT24, NO), or when the intensity value is stored in CS level (CH) (ACT25), the processor 111 determines whether the intensity value is larger than a predetermined reception threshold value (ACT26). When determining that the intensity value is larger than the predetermined reception threshold value (ACT26, YES), the processor 111 adds 1 to the value of the "TIME2(CH)" (ACT27). When 1 is added to the value of the "TIME2(CH)", the processor 111 displays a warning on the display unit 15 (ACT28).

When it is determined that the intensity value is equal to or less than the predetermined reception threshold value (ACT26, NO), or when the warning is displayed on the display unit 15 (ACT28), the processor 111 increments CH (ACT29).

When CH is incremented, the processor 111 determines whether CH is 19 (ACT 30). When determining that CH is not 19 (ACT 30, NO), the processor 111 returns to ACT 23.

When it is determined that CH is 19 (ACT 30, YES), or when 10 ms does not elapse (ACT 21, NO), the processor 111 determines whether a request for the channel report is received from the POS terminal 20 through the communication unit 121 (ACT 31).

When determining that the request is received from the POS terminal 20 (ACT 31, YES), the processor 111 sends the channel report to the POS terminal 20 through the communication unit 121 (ACT 32).

When the channel report is transmitted to the POS terminal 20, the processor 111 resets the "TIME1", the "TIME2", and the "CS level" in the channel report (ACT 33) . That is, the processor 111 substitutes "0" into the "TIME1" and "TIME2" and substitutes "-99" into the "CS level".

When it is determined that the request is not received from the POS terminal 20 (ACT 31, NO), or when the "TIME1", the "TIME2", and the "CS level" are reset (ACT33), the processor 111 returns to ACT12.

The wireless tag does not have to be attached to the merchandise item. Further, the wireless tag may be attached to an article such as a part, a piece of luggage, or an exhibit.

The reader 10 may also be a stationary device. For example, the reader 10 may include a case where merchandise items are thrown in. In this case, the reader 10 uses the antenna 13 to read the ID from the wireless tag attached to the merchandise item placed in the case.

The reader configured as described above receives radio waves on each channel during the carrier sense time. The reader stores the time when the radio wave is received in each channel and the intensity value of the received radio wave in the channel report. As a result, the reader can determine the state of the channel in which the other device outputs the radio wave.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure as defined in the appended claims.

## Claims

1. A reader (10), comprising:
an antenna (13) for communicating with a wireless tag;
**characterized by** further comprising:
a processor (111) configured to measure a time when a radio wave is received on a predetermined channel during a carrier sensing time, the carrier sensing time being a time when the wireless tag is not communicating; and
a memory storage (122) configured to store a channel report indicating the time when the radio wave is received;
wherein
the processor (111) is configured to acquire an intensity value of the radio wave received on the predetermined channel, and
the channel report indicates the intensity value.

2. The reader (10) according to claim 1, wherein
the predetermined channel includes a plurality of channels.

3. The reader (10) according to claim 1, wherein
the processor (111) is configured to output a warning when the intensity value is greater than a predetermined threshold value.

4. The reader (10) according to any of claims 1 to 3, wherein the channel report includes a channel availability.

5. The reader (10) according to any of claims 1 to 4, wherein the processor is configured to, when no configurable channel is available, cause an error message to be displayed.

6. The reader (10) according to any of claims 1 to 5, further comprising:
a communicator (121) configured to send and receive data to and from a terminal, wherein
the processor (111) is configured to send the channel report to the terminal through the communicator (121).

7. The reader (10) according to claim 6, wherein the channel report includes a total time during which the reader communicates with the wireless tag on a corresponding channel.

8. The reader (10) according to claim 6 or 7, wherein the channel report includes a total time during which another terminal communicates with the wireless tag on a corresponding channel.

9. A method of operating a reader (10), comprising:
communicating with a wireless tag;
**characterized by** further comprising:
measuring a time when a radio wave is received on a predetermined channel during a carrier sensing time, the carrier sensing time being a time when the wireless tag is not communicating; and
storing a channel report indicating the time when the radio wave is received;
acquiring an intensity value of the radio wave received on the predetermined channel, and wherein the channel report indicates the intensity value.

10. The method according to claim 9, wherein
the predetermined channel includes a plurality of channels.

11. The method according to claim 9, further comprising:
outputting a warning when the intensity value is greater than a predetermined threshold value.

12. The method according to any of claims 9 to 11, wherein the channel report includes a channel availability.

13. The method according to any of claims 9 to 12, further comprising:
causing an error message to be displayed when no configurable channel is available.

## Patentansprüche

1. Leser (10), umfassend:
eine Antenne (13) für die Kommunikation mit einem drahtlosen Etikett;
**dadurch gekennzeichnet, dass** er weiter Folgendes umfasst:
einen Prozessor (111), der so konfiguriert ist, dass er eine Zeit misst, zu der eine Funkwelle auf einem vorbestimmten Kanal während einer Trägererfassungszeit empfangen wird, wobei die Trägererfassungszeit eine Zeit ist, in der das drahtlose Etikett nicht kommuniziert; und
einen Speicher (122), der so konfiguriert ist, dass er einen Kanalbericht speichert, der die Zeit angibt, zu der die Funkwelle empfangen wird;
wobei
der Prozessor (111) so konfiguriert ist, dass er einen Intensitätswert der auf dem vorbestimmten Kanal empfangenen Funkwelle erlangt, und
der Kanalbericht den Intensitätswert angibt.

2. Leser (10) nach Anspruch 1, wobei der vorbestimmte Kanal eine Vielzahl von Kanälen einschließt.

3. Leser (10) nach Anspruch 1, wobei
der Prozessor (111) so konfiguriert ist, dass er eine Warnung ausgibt, wenn der Intensitätswert größer als ein vorbestimmter Schwellenwert ist.

4. Leser (10) nach einem der Ansprüche 1 bis 3, wobei der Kanalbericht eine Kanalverfügbarkeit einschließt.

5. Leser (10) nach einem der Ansprüche 1 bis 4, wobei der Prozessor so konfiguriert ist, dass er, wenn kein konfigurierbarer Kanal verfügbar ist, bewirkt, dass eine Fehlermeldung angezeigt wird.

6. Leser (10) nach einem der Ansprüche 1 bis 5, weiter umfassend:
ein Kommunikationsgerät (121), das so konfiguriert ist, dass es Daten zu und von einem Endgerät sendet und empfängt, wobei
der Prozessor (111) so konfiguriert ist, dass er den Kanalbericht über das Kommunikationsgerät (121) an das Endgerät sendet.

7. Leser (10) nach Anspruch 6, wobei der Kanalbericht eine Gesamtzeit einschließt, während der der Leser mit dem drahtlosen Etikett auf einem entsprechenden Kanal kommuniziert.

8. Leser (10) nach Anspruch 6 oder 7, wobei der Kanalbericht eine Gesamtzeit einschließt, während der ein anderes Endgerät mit dem drahtlosen Etikett auf einem entsprechenden Kanal kommuniziert.

9. Verfahren zum Bedienen eines Lesers (10), umfassend:
Kommunizieren mit einem drahtlosen Etikett;
**dadurch gekennzeichnet, dass** es weiter Folgendes umfasst:
Messen einer Zeit, zu der eine Funkwelle auf einem vorbestimmten Kanal während einer Trägererfassungszeit empfangen wird, wobei die Trägererfassungszeit eine Zeit ist, in der das drahtlose Etikett nicht kommuniziert; und
Speichern eines Kanalberichts, der die Zeit angibt, zu der die Funkwelle empfangen wird;
Erlangen eines Intensitätswertes der auf dem vorbestimmten Kanal empfangenen Funkwelle, und wobei der Kanalbericht den Intensitätswert angibt.

10. Verfahren nach Anspruch 9, wobei der vorbestimmte Kanal eine Vielzahl von Kanälen einschließt.

11. Verfahren nach Anspruch 9, weiter umfassend: Ausgeben einer Warnung, wenn der Intensitätswert größer als ein vorbestimmter Schwellenwert ist.

12. Verfahren nach einem der Ansprüche 9 bis 11, wobei der Kanalbericht eine Kanalverfügbarkeit einschließt.

13. Verfahren nach einem der Ansprüche 9 bis 12, weiter umfassend:
Bewirken, dass eine Fehlermeldung angezeigt wird, wenn kein konfigurierbarer Kanal verfügbar ist.

## Revendications

1. Lecteur (10), comprenant :
une antenne (13) destinée à communiquer avec une étiquette sans fil ;
**caractérisé en ce qu'**il comprend en outre :
un processeur (111) configuré pour mesurer une durée pendant laquelle une onde radio est reçue sur un canal prédéterminé pendant une durée d'écoute de porteuse, la durée d'écoute de porteuse étant une durée pendant laquelle l'étiquette sans fil ne communique pas ; et
une mémoire de stockage (122) configurée pour stocker un rapport de canal indiquant la durée pendant laquelle l'onde radio est reçue ;
dans lequel
le processeur (111) est configuré pour acquérir une valeur d'intensité de l'onde radio reçue sur le canal prédéterminé, et
le rapport de canal indique la valeur d'intensité.

2. Lecteur (10) selon la revendication 1, dans lequel le canal prédéterminé comporte une pluralité de canaux.

3. Lecteur (10) selon la revendication 1, dans lequel
le processeur (111) est configuré pour sortir un avertissement lorsque la valeur d'intensité est supérieure à une valeur de seuil prédéterminée.

4. Lecteur (10) selon l'une quelconque des revendications 1 à 3, dans lequel le rapport de canal comporte une disponibilité de canal.

5. Lecteur (10) selon l'une quelconque des revendications 1 à 4, dans lequel le processeur est configuré pour, lorsqu'aucun canal configurable n'est disponible, faire s'afficher un message d'erreur.

6. Lecteur (10) selon l'une quelconque des revendications 1 à 5, comprenant en outre :
un communicateur (121) configuré pour envoyer des données à un terminal et les recevoir à partir de celui-ci, dans lequel
le processeur (111) est configuré pour envoyer le rapport de canal au terminal par le biais du communicateur (121).

7. Lecteur (10) selon la revendication 6, dans lequel le rapport de canal comporte une durée totale pendant laquelle le lecteur communique avec l'étiquette sans fil sur un canal correspondant.

8. Lecteur (10) selon la revendication 6 ou la revendication 7, dans lequel le rapport de canal comporte une durée totale pendant laquelle un autre terminal communique avec l'étiquette sans fil sur un canal correspondant.

9. Procédé destiné à faire fonctionner un lecteur (10), comprenant :
communiquer avec une étiquette sans fil ;
**caractérisé en ce qu'**il comprend en outre :
mesurer une durée pendant laquelle une onde radio est reçue sur un canal prédéterminé pendant une durée d'écoute de porteuse, la durée d'écoute de porteuse étant une durée pendant laquelle l'étiquette sans fil ne communique pas ; et
stocker un rapport de canal indiquant la durée pendant laquelle l'onde radio est reçue ;
acquérir une valeur d'intensité de l'onde radio reçue sur le canal prédéterminé, et dans lequel le rapport de canal indique la valeur d'intensité.

10. Procédé selon la revendication 9, dans lequel le canal prédéterminé comporte une pluralité de canaux.

11. Procédé selon la revendication 9, comprenant en outre : sortir un avertissement lorsque la valeur d'intensité est supérieure à une valeur de seuil prédéterminée.

12. Procédé selon l'une quelconque des revendications 9 à 11, dans lequel le rapport de canal comporte une disponibilité de canal.

13. Procédé selon l'une quelconque des revendications 9 à 12, comprenant en outre :
faire s'afficher un message d'erreur lorsqu'aucun canal configurable n'est disponible.
